# EUROPÄISCHE PATENTANMELDUNG

(11) **EP 2 617 586 A2**
(43) Veröffentlichungstag der Anmeldung: **24.07.2013**
(21) Anmeldenummer: 13152380.5
(22) Anmeldetag: 23.01.2013
(51) Int. Cl.: B60G 11/28

(54) **Vorrichtung zur karosserieseitigen Lagerung einer Luftfeder sowie Luftfederanordnung umfassend eine solche Vorrichtung**

(30) Priorität: 23.01.2012 DE 102012200899
(71) Anmelder: VORWERK AUTOTEC GmbH & Co. KG, 42287 Wuppertal (DE)
(72) Erfinder: Beljanin, Alexej, 44629 Herne (DE); Gorjup, Michael, 41460 Neuss (DE); Möhring, Martin, 42697 Solingen (DE)
(74) Vertreter: Lippert, Stachow & Partner

(57) **Zusammenfassung**

Um die Lagerung von Luftfedern (100) in Fahrzeugen zu verbessern wird eine Vorrichtung (10, 10') zur karosserieseitigen Lagerung einer Luftfeder in einem Fahrzeug mit einem ringförmigen Stützlager vorgeschlagen, das eine luftfederseitige Anlage zur Abstützung der Vorrichtung an der Luftfeder sowie eine karosserieseitige Anlage zur Abstützung der Vorrichtung an der Karosserie des Fahrzeuges bereitstellt. Dabei umfasst das Stützlager zumindest zwei ringsegmentförmige Elastomerpakete (11, 12, 13; 11', 12', 13'), die jeweils ein luftfederseitiges Beschlagelement (20) und ein karosserieseitiges Beschlagelement (50, 50') aufweisen, zwischen welchen zumindest eine Elastomerlage (30, 35) angeordnet ist, wobei die zumindest zwei ringsegmentförmigen Elastomerpakete umfänglich in Reihe angeordnet sind. Die Erfindung betrifft ferner eine Luftfederanordnung (1) umfassend eine wie beschrieben ausgebildete Vorrichtung (10, 10') zur karosserieseitigen Lagerung einer Luftfeder zusammen mit einer solchen Luftfeder (100).

## Beschreibung

Die Erfindung betrifft eine Vorrichtung zur karosserieseitigen Lagerung einer Luftfeder in einem Fahrzeug.

Im Fahrzeugbau hat die Verwendung einer Luftfederung eine immer größere Verbreitung, beispielsweise im Bereich der oberen Mittel- und Oberklasse von Pkws sowie bei Bussen gefunden. Mit Luftfedern ausgestattete Fahrzeuge zeichnen sich durch einen hohen Fahrkomfort sowie eine variable Fahrzeughöhe aus. Die Federung erfolgt mittels eines Luftbalgs, in welchem Druckluft beim Ein- und Ausfedern mit schwankendem Druck die Gegenkraft zu den fahrdynamischen Kräften am jeweiligen Rad oder der Achse bildet. Mittels eines Ventils kann der Druck in der jeweiligen Luftfeder beispielsweise so geregelt werden, dass die Wagenhöhe unabhängig von der Belastung konstant bleibt.

Herkömmlicherweise ist eine solche Luftfeder zwischen der Karosserie sowie der Aufhängung des jeweiligen Rades bzw. der zugeordneten Achse angeordnet. Im Fahrbetrieb werden derartige Luftfedern nicht nur auf Druck, sondern auch torsional bzw. auf Zug belastet. Solche Belastungen können zu einer verminderten Betriebsdauer der Luftfeder, insbesondere des Balgs der Luftfeder führen. Zur Verminderung der Kräfte auf den Federbalg sind bei herkömmlichen Luftfedern häufig Stützlager vorgesehen, welche insbesondere innerhalb der Luftfeder selbst angeordnet sein können. Eine derartige Gestaltung einer Luftfederanordnung ist beispielsweise in der DE 10 2004 033 199 A2 bzw. in der DE 10 2010 026 002 A1 offenbart.

Der Erfindung liegt die Aufgabe zugrunde, die Lagerung von Luftfedern in Fahrzeugen zu verbessern. Diese Aufgabe löst die vorliegende Erfindung mit einer Vorrichtung zur karosserieseitigen Lagerung einer Luftfeder in einem Fahrzeug mit einem ringförmigen Stützlager, wobei die Vorrichtung eine luftfederseitige Anlage zur Abstützung der Vorrichtung an der Luftfeder sowie eine karosserieseitige Anlage zur Abstützung der Vorrichtung an der Karosserie des Fahrzeuges bereitstellt. Dabei umfasst das Stützlager zumindest zwei ringsegmentförmige Elastomerpakete, die jeweils ein luftfederseitiges Beschlagelement und ein karosserieseitiges Beschlagelement aufweisen, zwischen welchen zumindest eine Elastomerlage angeordnet ist, wobei die zumindest zwei ringsegmentförmigen Elastomerpakete umfänglich in Reihe angeordnet sind.

Dadurch, dass sich das ringförmige Stützlager erfindungsgemäß aus mehreren, umfänglich in Reihe anordnenbare Elastomerpaketen zusammensetzt, ergibt sich eine höhere Flexibilität in Bezug auf die spezifischen Gestaltungsmöglichkeiten des Stützlagers, sodass beispielsweise mit einer höheren Genauigkeit oder mit einfacheren Mitteln die gewünschte axiale, radiale bzw. torsionale Kennung des Lagers einstellbar sind. Auch das erfindungsgemäßen Vorsehen des Stützlagers in einer Vorrichtung, die in der Regel nicht Bauteil der luftvolumenvariablen Gestaltung der Federung, d.h. der eigentlichen Luftfeder ist, verbessert die Gestaltungsmöglichkeiten des Stützlagers.

Vorteilhafte Ausführungsformen sowie weitere erfindungsgemäße Merkmale sind in den Unteransprüchen sowie den nachfolgenden Erläuterungen und Beschreibungen angegeben.

Vorteilhafterweise kann die zumindest eine Elastomerlage stoffschlüssig, insbesondere mittels Vulkanisieren mit dem luftfederseitigen und/oder karosserieseitigen Beschlagelement verbunden sein.

Vorteilhafterweise können die Beschlagelemente auch ringsegmentartig ausgebildet sein. Gleiches gilt für die zumindest eine Elastomerlage bzw. einen eventuell vorgesehenen Einleger.

Der Begriff Luftfeder wird im Folgenden in Verbindung mit der Gesamtanordnung von Bauteilen verwendet, welche den veränderbaren Luftraum der Feder festlegen.

Zur Einstellung einer vorgegebenen axialen, radialen und/oder einer torsionalen Kennung des Stützlagers der erfindungsgemäßen Vorrichtung kann es zweckmäßig sein, wenn ein Elastomerpaket zumindest eine weitere Elastomerlage zwischen den beiden, in der Regel das Elastomerpaket in axialer Richtung begrenzenden Beschlagelemente aufweist, wobei zwischen benachbarten Elastomerlagen ein Einleger angeordnet sein kann. Insofern können beim Vorsehen von insgesamt zwei Elastomerlagen ein einzelner Einleger zwischen den beiden Beschlagelementen angeordnet sein, welcher die beiden Elastomerlagen zumindest abschnittsweise trennt, bei drei insbesondere in axialer Richtung aufeinanderfolgenden Elastomerlagen können zwei Einleger vorgesehen sein, usw..

Erfindungsgemäß kann jedoch auch bei einem oder allen umfänglich in Reihe angeordneten Elastomerpaketen vorgesehen sein, dass axial außen zu einem Beschlagelement ein weiteres ringartiges Element aus einem beliebigen Material angeordnet ist.

Um eine im Betrieb geräuschfreie Anlage oder Verbindung zwischen weiteren Teilen der Vorrichtung und den ringsegmentförmigen Elastomerpaketen bereitzustellen, kann es zweckmäßig sein, wenn bei einem Elastomerpaket das luftfederseitige Beschlagelement und/oder das karosserieseitige Beschlagelement an seiner axialen Außenseite bzw. -fläche mit einer Elastomerschicht belegt ist bzw. sind. Eine solche Elastomerschicht ist viel dünner als eine zwischen den beiden Beschlagelementen angeordnete Elastomerlage, sodass erstere nur einen vernachlässigbaren Einfluss auf die Kennung des Stützlagers aufweist.

Zur Bereitstellung einer topfartigen Aufnahme und/oder einer Anlage, insbesondere einer Anlagefläche für die Luftfeder kann es zweckmäßig sein, wenn bei der erfindungsgemäßen Vorrichtung die zumindest zwei luftfederseitig angeordneten Beschlagelemente der zumindest zwei umfänglich in Reihe angeordneten Elastomerpakete in ihrer radialen Erstreckung stufenartig ausgebildet sind. Hierdurch kann die angegebene topfartige Aufnahme zur umfänglichen Umgreifung der Luftfeder bereitgestellt werden. Der durch die radial innen liegenden Abschnitte gebildete Flansch der Aufnahme kann dabei eine radiale Anlagefläche für eine zugeordnete Anlagefläche an der Luftfeder darstellen. Gleichzeitig ist die Luftfeder durch die axiale, umlaufende Fläche der beschriebenen Aufnahme radial gehalten.

In einer Ausführungsform stellen die Außenflächen der karosserieseitigen Beschlagelemente der zumindest zwei umfänglich in Reihe angeordneten Elastomerpakete zusammen eine ebene, insbesondere radial ausgerichtete Anlagefläche bereit, beispielsweise zur direkten Anlage an die Karosserie. Andererseits kann es auch zweckmäßig sein, wenn die Vorrichtung karosserieseitig durch ein Deckelelement abgeschlossen ist, welches an den karosserieseitigen Beschlagelementen direkt oder indirekt anliegt und mit seiner Außenfläche die karosserieseitige Anlage bereitstellt.

Zweckmäßigerweise kann der Aufbau der erfindungsgemäßen Vorrichtung dergestalt sein, dass zunächst die einzelnen ringsegmentförmigen Elastomerpakete hergestellt und nachfolgend zu dem ringförmigen Stützlager zusammengesetzt werden. Durch umfängliches Aneinanderreihen der zumindest zwei ringsegmentförmigen Elastomerpakete auf einem Deckelelement, bei dem das jeweilige Elastomerpaket mit seinem karosserieseitigen Beschlagelement an bzw. auf dem Deckelelement angelegt und fixiert wird, kann auf einfache Art und Weise das ringförmige Stützlager aufgebaut werden.

Dabei kann dieses Deckelelement beispielsweise einen Kunststoff, ein Metall oder auch ein Verbundwerkstoff umfassen bzw. daraus gebildet sein.

In einer besonderen Ausführungsform kann das karosserieseitige Beschlagelement aus einem thermoplastischen Material hergestellt und verdrehsicher mit dem Deckelelement verbunden sein. Beispielsweise ist es möglich, an der Außenfläche der jeweiligen karosserieseitigen Beschlagelementen sich axial nach außen erstreckende Vorsprünge vorzusehen, welche sich durch zugeordnete Löcher im Deckelement erstrecken wobei die Vorsprünge durch eine Verschmelzung mit dem Deckelelement vernietet sein können.

Neben einer formschlüssigen Verbindung zwischen den karosserieseitigen Beschlagelementen der zumindest zwei Elastomerpaketen und dem Deckelelement kann in einer weiteren Ausführungsform auch vorgesehen sein, die ringsegmentförmigen Elastomerpakete an der Außenfläche der karosserieseitigen Beschlagelemente mit dem Deckelelement stoffschlüssig zu verbinden, beispielsweise durch Verkleben.

Je nach Anzahl der verwendeten ringsegmentförmigen Elastomerpakete zur Gestaltung des Stützlagers in der erfindungsgemäßen Vorrichtung, können diese Elastomerpakete eine vorgegebene umfängliche Erstreckung zur Gestaltung des Stützlagers aufweisen.

Darüber hinaus können auch die in axialer Richtung unterschiedlichen Schichten eines Elastomerpakets, beispielsweise eine Elastomerlage, das karosserieseitige Beschlagelement sowie das luftfederseitige Beschlagelement, eine zueinander unterschiedliche umfängliche Erstreckung aufweisen.

Besonders zweckmäßig ist es, wenn zwischen zwei umfänglich benachbarten, ringsegmentförmigen Elastomerpaketen des Stützlagers ein radialer Durchgang vorgesehen ist, insbesondere derart, dass zumindest zwei, umfänglich in Reihe angeordnete luftfederseitige Beschlagelemente umfänglich beabstandet sind. Durch diese gestalterische Maßnahme kann beispielsweise eine einfache Zugänglichkeit für die Luftversorgung an der Luftfeder bereitgestellt werden, beispielsweise in Form eines Verbindungsschlauchs zwischen einem entsprechenden Anschluss an der Luftfeder und einem außerhalb der Luftfederanordnung platzierten Ventil, über das Luft in die Luftfeder einführbar oder abführbar ist.

Zur Gestaltung einer geschlossenen karosserieseitigen Anlagefläche an der erfindungsgemäßen Vorrichtung kann zweckmäßigerweise vorgesehen sein, dass die karosserieseitigen Beschlagelemente der umfänglich in Reihe angeordneten zumindest zwei Elastomerpakete ein im Wesentlichen umfänglich geschlossenes Ringelement bilden.

Zweckmäßigerweise kann das durch die umfänglich in Reihe angeordneten mehreren Elastomerpakete gebildete Stützlager in der erfindungsgemäßen Vorrichtung so gestaltet sein, dass es gegenüber axialen und radialen Belastungen hart und gegenüber einer torsionaler Belastung weich ausgelegt ist. Zweckmäßigerweise kann das Stützlager der erfindungsgemäßen Vorrichtung torsional weicher ausgebildet sein als der Balg der Luftfeder, so dass letzterer torsional wenig belastet wird.

Um eine Verdrehsicherung zwischen der Vorrichtung und der sich an dieser abstützenden Luftfeder bereitzustellen, kann erfindungsgemäß zumindest ein im Bereich der Aufnahme angeordneter Anschlag vorgesehen sein, zum Zusammenwirken mit einem zugeordneten, insbesondere radial verlaufenden Vorsprung an der Luftfeder. Ein solcher Anschlag kann beispielsweise durch ein stirnseitiges Teil eines Elastomerpakets bereitgestellt werden wenn zwischen umfänglich benachbarten Elastomerpaketen eine Lücke vorliegt, d.h. wenn sie umfänglich beabstandet sind.

Zweckmäßigerweise können die umfänglich in Reihe angeordneten, ringsegmentförmigen Elastomerpakete im Wesentlichen identisch aufgebaut sein, insbesondere in Bezug auf die axiale Abfolge der unterschiedlichen Lagen bzw. Schichten wie der bzw. den Elastomerlage(n) sowie dem bzw. den eventuellen Einlegern und den beiden äußeren Beschlagelementen. Insbesondere können die umfänglich in Reihe angeordneten, ringsegmentförmigen Elastomerpakete bezüglich der radialen und axialen Anordnung ihrer Beschlagelemente, der zumindest einen Elastomerlage und/oder ihres zumindest einen Einlegers vollkommen identisch aufgebaut sein, was die Herstellungskosten stark vermindert. Zweckmäßigerweise können dabei die einzelnen Elastomerpakete voneinander unabhängig zusammen in einem Arbeitsschritt herstellbar sein.

Zweckmäßigerweise kann ein Einleger ein flaches Element, insbesondere ein Blechelement sein.

Es hat sich als vorteilhaft herausgestellt, wenn an einem ringsegmentförmigen Elastomerpaket das luftfederseitige Beschlagelement sowie ein Einleger im Bereich ihres jeweiligen radial innen liegenden Endes und/oder im Bereich ihres jeweils radial außen liegenden Endes rein radial verlaufen, d. h. ohne Erstreckungskomponente in axialer Richtung. Dem gegenüber kann zur Einstellung vorgegebener Kennungen des Stützlagers in axialer, radialer bzw. torsionaler Richtung ein Beschlagelement und/oder ein Einleger in einem Abschnitt zwischen seinem radial innen liegenden und seinem radial außen liegenden Ende, insbesondere in einem mittleren Abschnitt mit einer axialen Erstreckungskomponente verlaufen. Diese Komponente kann je nach spezifischer Anwendung einen Winkel zwischen wenigen Grad und 90 Grad, insbesondere einen Winkel zwischen 30 und 60 Grad zur Achse des Stützlagers aufweisen. Bei diesen Ausführungsformen kann insbesondere ein Beschlagelement in Bezug auf seine, einer Elastomerlage zugewandten Seite, bzw. ein jeweiliger Einleger im Querschnitt eine stufenartige Gestalt aufweisen.

Dabei kann es auch zweckmäßig sein, wenn in einem ringsegmentförmigen Elastomerpaket das luftfederseitige Beschlagelement sowie ein axial benachbarter Einleger sich parallel zueinander erstrecken. Ferner kann es zur Einstellung einer vorgegebenen Kennung des Stützlagers auch vorteilhaft sein, wenn sich das luftfederseitige Beschlagelement sowie ein axial benachbarter Einleger eines ringsegmentförmigen Elastomerpakets axial überlappen.

In gleicher Weise kann das karosserieseitige Beschlagelement eines Elastomerpakets bezüglich einer zur Elastomerlage weisenden Innenfläche im Querschnitt eine stufenartige Ausbildung aufweisen.

Es sei darauf hingewiesen, dass die vorstehend und nachstehend verwendeten Angaben "radial" bzw. "axial" zur Bezeichnung von Richtungen an einem einzelnen Elastomerpaket mit Bezug auf das zusammengesetzte Stützlager zu verstehen sind.

Die Erfindung betrifft darüber hinaus eine Luftfederanordnung umfassend eine wie beschrieben ausgebildete Vorrichtung zur karosserieseitigen Lagerung einer Luftfeder zusammen mit einer dieser zugeordneten Luftfeder.

Die Erfindung wird im Folgenden durch das Beschreiben einiger Ausführungsformen unter Bezugnahme auf die beiliegenden Figuren erläutert, wobei
- Figur 1: eine Luftfederanordnung 1 mit einer erfindungsgemäß ausgebildeten Vorrichtung 10 zur karosserieseitigen Lagerung einer Luftfeder 100 in einer Teilansicht,
- Figur 2: die erfindungsgemäß gestaltete Vorrichtung 10 in einer perspektivischen Ansicht,
- Figur 3: die Vorrichtung 10 gemäß Figur 2 in einer Unteransicht,
- Figur 4: die erfindungsgemäße Vorrichtung 10 gemäß Figur 2 in einer Seitenansicht,
- Figur 5: die erfindungsgemäße Vorrichtung 10 gemäß Figur 2 in einer perspektivischen Schrägansicht von unten,
- Figur 6: eine Schnittdarstellung im Ausschnitt der in Figur 5 angegebenen Vorrichtung in der Ebene S1,
- Figur 7: eine zweite erfindungsgemäß ausgebildete Vorrichtung 10' zur karosserieseitigen Lagerung einer Luftfeder in einer perspektivischen Ansicht und
- Figur 8: die in Figur 7 angegebene zweite Ausführungsform der erfindungsgemäßen Vorrichtung 10' in einer Schnittdarstellung in der Ebene S2 ähnlich wie die der Figur 6
zeigt.

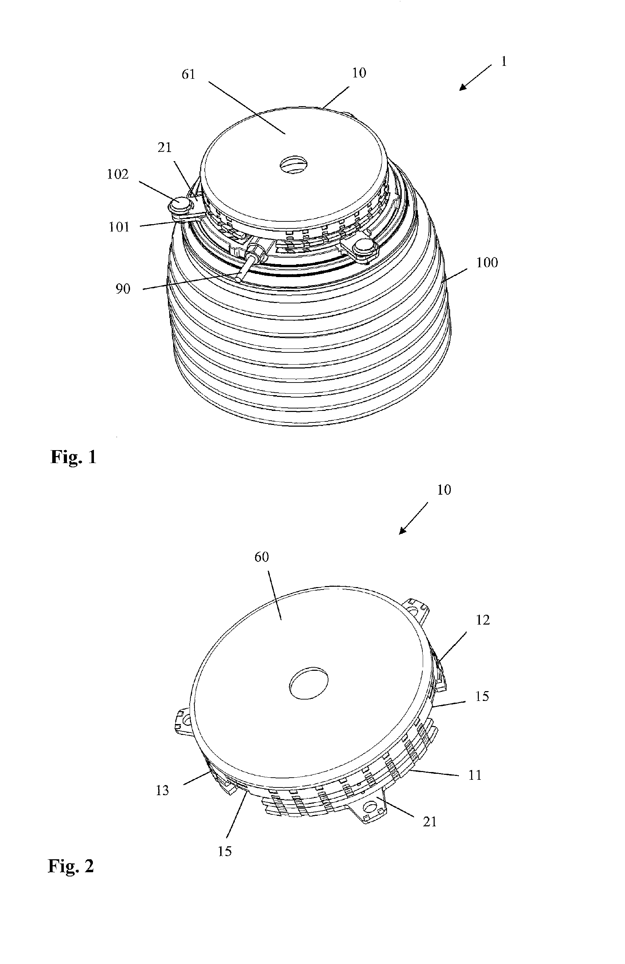

In Figur 1 ist im Ausschnitt eine Luftfederanordnung 1 dargestellt, welche eine Vorrichtung 10 zur karosserieseitigen Lagerung einer Luftfeder sowie diese Luftfeder 100 umfasst. In der Figur ist diese Luftfeder 100 nur teilweise dargestellt. Die angegebene Anordnung 1 wird zwischen der Karosserie des jeweiligen Kraftfahrzeuges sowie der Rad- bzw. Achsaufhängung platziert. Karosserieseitig stützt sich die Luftfederanordnung mit einer Oberseite 61 an der Karosserie ab.

In der angegebenen Ausführungsform weist die Stützlagervorrichtung 10 drei umfänglich um 120° beabstandete, radial nach außen weisende, gelochte Befestigungsflansche 21 auf, welche mit zugeordneten Befestigungsflanschen 101 an der Luftfeder 100 korrespondieren. Mittels durch die Öffnungen hindurch geführte Sicherungsbolzen 102 sind die Stützlagervorrichtung 10 sowie die Luftfeder 100 zur Erleichterung der Montage der Luftfederanordnung an das jeweilige Kraftfahrzeug miteinander verbunden.

Dargestellt ist ferner eine Druckluftleitung 90, die an die Luftfeder angeschlossen ist und über welche der Luftdruck innerhalb der Luftfeder 100 im Betrieb eingestellt bzw. geregelt wird.

In der beschriebenen Ausführungsform weist die Luftfeder 100 einen elastomeren Rollbalg auf, welcher für ein veränderbares Luftvolumen der Luftfeder in Betrieb verantwortlich zeichnet. Dabei rollt der Rollbalg bei einer im Wesentlichen axial gerichteten Federbewegung unter Ausbildung zumindest einer Rollfalte ab. Da der grundsätzliche Aufbau und die Funktionsweise einer solchen Luftfeder wohl bekannt sind, wird im Folgenden darauf nicht weiter eingegangen.

Figur 2 zeigt die erfindungsgemäße Stützlagervorrichtung 10 in einer perspektivischen Ansicht ohne die Luftfeder, welche durch die Bauteile festgelegt ist, welche den luftvolumenvariablen Hohlraum festlegen. Insofern ist bei der in Figur 1 angegebenen Ausführungsform einer erfindungsgemäßen Luftfederanordnung 1 eine luftundichte Verbindung zwischen der Stützlagervorrichtung 10 und der eigentlichen Luftfeder 100 ausreichend, was den Gestaltungs- und Herstellungsaufwand für das Lager verringert.

In der beschriebenen Ausführungsform setzt sich die Stützlagervorrichtung 10 aus einem Deckelelement 60 sowie aus drei umfänglich auf dem Deckelelement 60 in Reihe angeordneten ringsegmentförmigen Elastomerpaketen 11, 12 und 13 zusammen, die in der dargestellten Ausführungsform vollkommen identisch ausgebildet sind. Sie setzen sich in axialer Richtung zusammen aus einer Abfolge unterschiedlicher Lagen der Stützlagervorrichtung 10. Zwischen zwei umfänglich beabstandeten Elastomerpaketen ist zumindest ein radialer Durchgang 15 vorgesehen, über welche die Versorgung der Luftfeder bereitgestellt ist, siehe auch Figur 1.

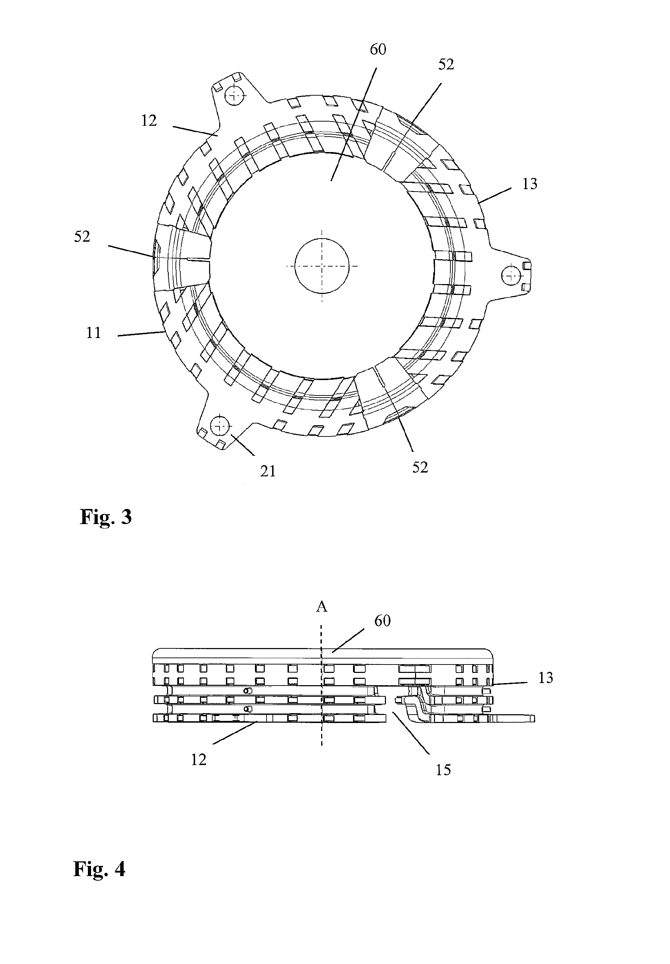

Figur 3 zeigt die in Figur 2 dargestellte Stützlagervorrichtung in einer frontalen Unteransicht. Bei der beschriebenen Ausführungsform sind die drei Elastomerpakete 11, 12, 13 so ausgebildet, dass benachbarte Pakete sich an den umfänglichen Stirnflächen 52 berühren. In einer nicht dargestellten Ausführungsform kann die umfängliche Erstreckung der ringsegmentförmigen Elastomerpakete geringer sein, hier geringer als 120°, sodass die Elastomerpakete sich an ihren umfänglichen Stirnflächen 52 nicht berühren. Aus Figur 3 geht auch hervor, dass zumindest einige der unterschiedlichen Lagen der jeweiligen Elastomerpakete eine geringere umfängliche Erstreckung als 120° aufweisen, sodass die schon beschriebenen radialen Durchgänge 15 gebildet sind, siehe auch Figur 2.

Figur 4 zeigt die Stützlagervorrichtung der Figur 2 in einer Seitenansicht mit Blick auf einen radialen Durchgang 15.

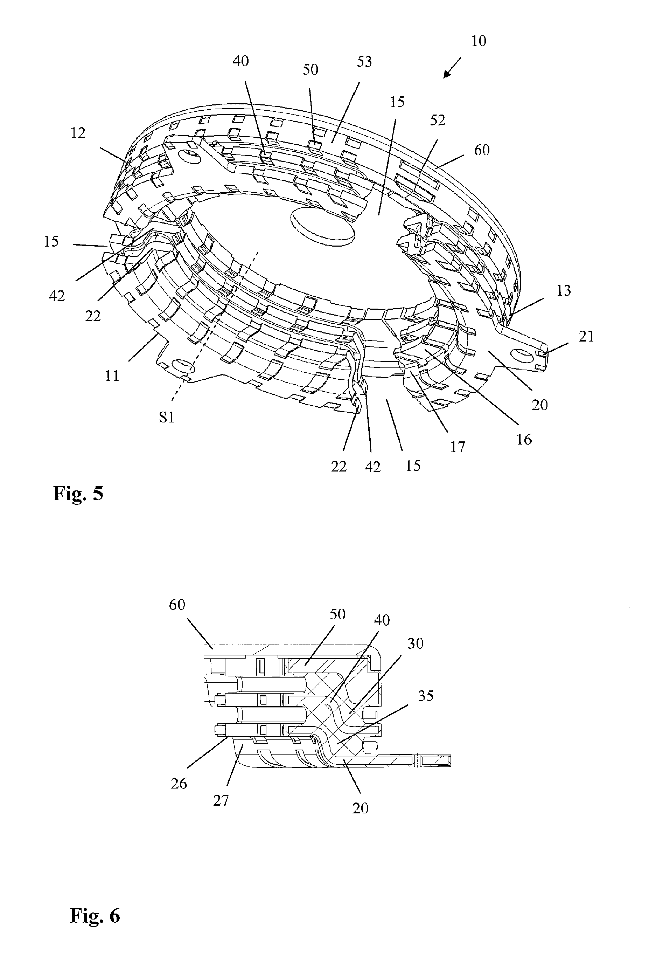

Der genaue Aufbau der in Figur 2 dargestellten Stützlagervorrichtung 10 bzw. der genaue Aufbau eines Elastomerpakets 11, 12, 13 wird nun mit Bezug auf die Figuren 5 und 6 erläutert. Figur 5 stellt dabei eine luftfederseitige perspektivische Ansicht auf das Stützlager 10 und Figur 6 eine Schnittansicht in der in Figur 5 angegebenen Ebene S1 dar. Jedes der drei ringsegmentförmigen Elastomerpakete 11, 12, 13 setzt sich in der dargestellten Ausführungsform aus einem ringsegmentförmigen, luftfederseitigen Beschlag 20, einem ringsegmentförmigen Einleger 40 sowie einem ringsegmentförmigen karosserieseitigen Beschlag 50 zusammen. Zwischen dem luftfederseitigen Beschlag 20 und dem Einleger 40 ist eine ringsegmentförmige Elastomerlage 35 vorgesehen, welche sowohl mit dem luftfederseitigen Beschlag 20 als auch mit dem Einleger 35 stoffschlüssig verbunden ist, beispielsweise durch Anvulkanisieren. In ähnlicher Weise ist zwischen dem Einleger 40 und dem karosserieseitigen Beschlag 50 eine weitere Elastomerlage 30 angeordnet, die mit dem der Elastomerlage 30 zugewandten Seiten des Einlegers 40 und dem Beschlags 50 stoffschlüssig verbunden ist. Aufgrund einer wählbaren, spezifischen geometrischen Gestaltung des aus den umfänglich aneinandergereihten Elastomerpaketen zusammengesetzten Stützlagers mit den jeweiligen beiden Elastomerlagen 30, 35, dem Einleger 40 sowie den beiden Beschlägen 20, 50 ist eine vorgebare axiale, radiale und torsionale Kennung des Lagers einstellbar, wobei die Vorspannung des Lagers durch das aufliegende Fahrzeuggewicht mit zu berücksichtigen ist.

Wie aus den Figuren 5, 6 ersichtlich, weist der luftfederseitige Beschlag 20 an seinem radial außen liegenden Ende eine im Wesentlichen zur Achse A des Lagers radiale Erstreckung auf, gleiches gilt für sein radial innen liegendes Ende. Zwischen beiden erstreckt sich der Beschlag 20 zumindest mit einer Erstreckungskomponente in axialer Richtung, sodass sich die dargestellte Stufenform ergibt. Aufgrund der umfänglichen Aneinanderreihung der drei Elastomerpakete 11, 12, 13 auf dem Deckelelement 60 entsteht das ringförmige Stützlager , welches luftfederseitig einen innen liegenden radialen Anlageflansch 16 sowie einen axialen Anlageflansch 17 bereitstellt, welche zusammen eine Aufnahme für die in den Figuren 5, 6 nicht dargestellte Luftfeder darstellen. Insofern wird eine nicht dargestellte Luftfeder im oberen, dem Stützlager zugewandten Bereich ihrer Erstreckung durch die beschriebene Aufnahme aufgenommen und stützt sich am radialen Anlageflansch 16 in axialer Richtung ab. Umfänglich wird die Luftfeder 100 damit durch den axialen Anlageflansch 17 gehalten, d.h. radial fixiert.

Beide Anlageflansche 16, 17 werden jeweils durch die entsprechenden Anlagesegmente 26, 27 der einzelnen Elastomerpakete 11, 12, 13 bereitgestellt. Die Gesamtheit der Anlagesegmente 26 bildet beispielsweise den Anlageflansch 16 der Stützlagervorrichtung. Wie insbesondere Figur 6 ersichtlich, ist sowohl der luftfederseitige Beschlag 20, die Elastomerlage 35, der Einleger 40, die Elastomerlage 30 als auch die zu den Elastomerlagen gerichtete Begrenzungsfläche des karosserieseitigen Beschlags 50 in der Schnittdarstellung stufenförmig ausgebildet. Je nach gewünschter spezifischer Kennung in radialer, axialer und torsionaler Richtung sind die Dicken der Elastomerlagen in axialer Richtung, die spezifischen Konstanten der Elastomerlagen selbst, als auch der genaue Verlauf der Stufenform gewählt. Wie der Fachmann erkennt, dient diese Stufenform einerseits zur Bereitstellung der beschriebenen Aufnahme der Luftfeder im Stützlager 10 als auch zur Einstellung dieser gewünschten Kennungen.

Bei der in den Figuren 1 bis 6 dargestellten Stützlagervorrichtung 10 ist das Deckelelement 60 zur Bereitstellung einer ebenen, ununterbrochenen karosserieseitigen Anlagefläche an die karosserieseitigen, ringsegmentförmigen Beschläge 50 angeklebt.

Wie aus Figur 5 hervorgeht, weisen bei der beschriebenen Ausführungsform umfassend drei kreisringsegmentförmige Elastomerpakete die karosserieseitigen Beschläge 50 jeweils eine umfängliche Erstreckung von 120° auf, sodass das Stützlager im Bereich dieser karosserieseitigen Beschläge geschlossen ist. Demgegenüber weisen die Einleger 40 sowie die luftfederseitigen Beschläge 20 eine geringere umfängliche Erstreckung, hier 110° auf, sodass die schon beschriebenen drei radialen Durchgänge 15 entstehen. Aus der Figur geht auch hervor, dass die Elastomerlagen 30, 35, eine noch geringere umfängliche Erstreckung aufweisen, in der beschriebenen Ausführungsform eine Erstreckung von etwa 95°.

Der Vollständigkeit halber sei noch darauf hingewiesen, dass in der beschriebenen Ausführungsform die Beschläge 20, 50 aufgrund des Herstellungsverfahrens auch an ihrer Außenseite, d.h. der luftfederseitige Beschlag an seiner Anlageflächen 16,17 zur Luftfeder sowie der karosserieseitige Beschlag 50 an seiner Außenseite zum Deckel mit Elastomer beschichtet ist. Die in den Figuren angegebenen rechteckförmigen Gestaltungen an deren Oberfläche sind durch eine Vielzahl von Haltefingern für die einzelnen Elemente in der Spritzgießform verursacht. An diesen Kontaktstellen fehlt die Elastomerschicht.

In der beschriebenen Ausführungsform sind die Beschläge 20, 50 als auch der Einleger aus Metall hergestellt. Auch andere Herstellungsmaterialien sind denkbar. Aufgrund seiner Gestalt mit variabler Dicke über seine Erstreckung ist der karosserieseitige Beschlag 50 kostengünstig als Spritzgussteil herstellbar.

Um zu vermeiden, dass sich die von der Stützlagervorrichtung 10 aufgenommene Luftfeder in der beschriebenen Aufnahme in bestimmten Betriebssituationen dreht, ist bei der erfindungsgemäßen Luftfederanordnung 1 vorgesehen, dass die Luftfeder mit radial sich nach außen erstreckenden Vorsprüngen an Stirnseitenabschnitten 22, 42 des Beschlags 20 bzw. des Einlegers 40 anliegt.

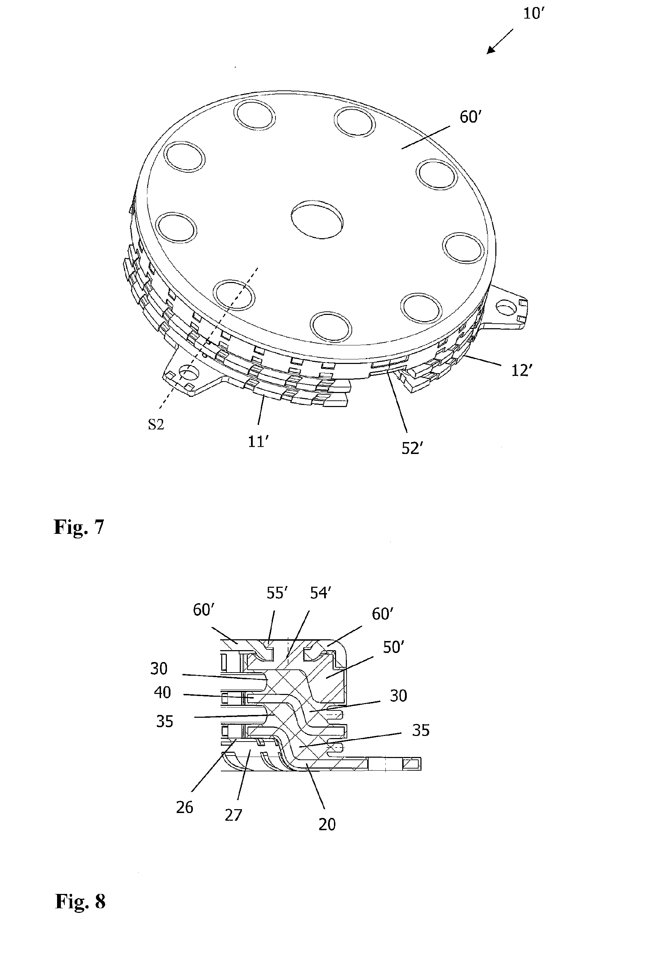

Mit Bezug auf die Figuren 7 und 8 wird eine zweite Ausführungsform einer erfindungsgemäß ausgebildeten Stützlagervorrichtung 10' erläutert. Gleiche Bauteile sind mit den gleichen Bezugszeichen ersehen. Im Folgenden werden allein die Unterschiede zur mit Bezug auf die Figuren 1 bis 6 erstbeschriebenen Ausführungsform einer Stützlagervorrichtung erläutert. Der Unterschied der Vorrichtung betrifft allein die Befestigung der drei Elastomerpakete 11', 12', 13' an dem Deckelelement 60'. Wie insbesondere aus Figur 8 hervorgeht, welche eine Schnittdarstellung in der Ebene S2 der Figur 7 angibt, ist der karosserieseitige Beschlag 50' mit Nieten 54' versehen, welche sich durch das gelochte Deckelelement 60' hindurch erstrecken. Die karosserieseitigen Beschläge 50' sind hier als Spritzgussteil ausgebildet, wobei jedes der Elastomerpakete 11', 12', 13' jeweils drei umfänglich beabstandete Nieten 54' aufweist, über welche die Elastomerpakete 11', 12', 13' am Deckelelement 60' befestigt sind. Die Vernietung wird beispielsweise durch Ultraschallschweißen an den Niete 54' zur Ausbildung eines jeweiligen Nietkopfs 55' durchgeführt.

### Bezugszeichenliste

- 1: Luftfederanordnung
- 10, 10': Vorrichtung/Stützlagervorrichtung
- 11, 11', 12, 12' , 13, 13': Elastomerpaket
- 15: Radialer Durchgang
- 16: Radialer Anlageflansch
- 17: Axialer Anlageflansch
- 20: Luftfederseitiges Beschlagelement
- 21: Befestigungsflansch
- 22: Stirnfläche
- 23: Elastomerschicht
- 26: Radiales Anlagesegment
- 27: Axiales Anlagesegment
- 30: Elastomerlage
- 35: Elastomerlage
- 40: Einleger
- 42: Stirnfläche
- 50, 50': Karosserieseitiges Beschlagelement
- 52, 52': Stirnfläche
- 53: Elastomerschicht
- 54': Niete
- 55': Nietkopf
- 60, 60': Deckelelement
- 61: Deckeloberseite
- 90: Druckluftleitung
- 100: Luftfeder
- 101: Befestigungsflansch
- 102: Sicherungsbolzen
- A: Achse des Stützlagers

## Patentansprüche

1. Vorrichtung zur karosserieseitigen Lagerung einer Luftfeder in einem Fahrzeug mit einem ringförmigen Stützlager, **gekennzeichnet durch** eine luftfederseitige Anlage zur Abstützung der Vorrichtung (10, 10') an der Luftfeder (100) sowie eine karosserieseitige Anlage zur Abstützung der Vorrichtung an der Karosserie des Fahrzeuges, wobei das Stützlager zumindest zwei ringsegmentförmige Elastomerpakete (11, 12, 13; 11', 12', 13') umfasst, welche jeweils ein luftfederseitiges Beschlagelement (20) und ein karosserieseitiges Beschlagelement (50, 50') aufweisen, zwischen welchen zumindest eine Elastomerlage (30, 35) angeordnet ist, wobei die zumindest zwei ringsegmentförmigen Elastomerpakete (11, 12, 13; 11', 12', 13') umfänglich in Reihe angeordnet sind.

2. Vorrichtung nach Anspruch 1, **dadurch gekennzeichnet, dass** ein Elastomerpaket (11, 12, 13; 11', 12', 13') zumindest eine weitere Elastomerlage zwischen dem luftfederseitiges Beschlagelement (20) und dem karosserieseitige Beschlagelement (50, 50') aufweist, wobei zwischen benachbarten Elastomerlagen (30, 35) ein Einleger (40) angeordnet ist.

3. Vorrichtung nach Anspruch 1 oder 2, **dadurch gekennzeichnet, dass** das luftfederseitige Beschlagelement (20) und/oder das karosserieseitiges Beschlagelement (50) an ihrer axialen Außenseite mit einer Elastomerschicht (53) belegt ist bzw. sind.

4. Vorrichtung nach Anspruch 1, 2 oder 3, **dadurch gekennzeichnet, dass** die zumindest zwei luftfederseitigen Beschlagelemente (20) stufenartig ausgebildet sind zur Bereitstellung einer topfartigen Aufnahme und/oder einer Anlage für die Luftfeder (100).

5. Vorrichtung nach einem der Ansprüche 1 bis 4, **dadurch gekennzeichnet, dass** die Vorrichtung (10, 10') karosserieseitig durch ein Deckelelement (60, 60') abgeschlossen ist, welches an den zumindest zwei karosserieseitigen Beschlagelementen (50) direkt oder indirekt anliegt, und die karosserieseitige Anlage bereitstellt.

6. Vorrichtung nach einem der Ansprüche 1 bis 5, **dadurch gekennzeichnet, dass** zwischen zwei umfänglich benachbarten, ringsegmentförmigen Elastomerpaketen (11, 12, 13; 11', 12', 13') des Stützlagers ein radialer Durchgang (15) vorgesehen ist, insbesondere die zumindest zwei, umfänglich in Reihe angeordneten luftfederseitigen Beschlagelemente umfänglich beabstandet sind.

7. Vorrichtung nach einem der Ansprüche 4 bis 6, **gekennzeichnet durch** zumindest einen im Bereich der Aufnahme vorgesehenen Anschlag zum Zusammenwirken mit einem zugeordneten, radial verlaufenden Vorsprung an der Luftfeder (100) zur Bereitstellung einer Verdrehsicherung zwischen der Vorrichtung (1) und der Luftfeder.

8. Vorrichtung nach einem der Ansprüche 1 bis 7, **dadurch gekennzeichnet, dass** die umfänglich in Reihe angeordneten, ringsegmentförmigen Elastomerpakete (11, 12, 13; 11', 12', 13') bezüglich der radialen, der axialen Anordnung und Gestaltung ihrer Beschlagelemente (20, 50, 50'), der zumindest einen Elastomerlage (30, 35) und/oder eines Einlegers (40) im Wesentlichen gleich aufgebaut sind.

9. Vorrichtung nach einem der Ansprüche 1 bis 8, **dadurch gekennzeichnet, dass** an einem ringsegmentförmigen Elastomerpaket (11, 12, 13; 11', 12', 13') das luftfederseitige Beschlagelement (20) sowie ein Einleger (40) im Bereich ihres jeweiligen radial innen liegenden Endes und/oder im Bereich ihres jeweiligen radial außen liegenden Endes rein radial verlaufen.

10. Vorrichtung nach einem der Ansprüche 1 bis 9, **dadurch gekennzeichnet, dass** ein Einleger (40) der ringsegmentförmigen Elastomerpakete (11, 12, 13; 11', 12', 13') in einem Abschnitt zwischen seinem radial innen liegenden Ende und seinem radial außen liegenden Ende, insbesondere in einem mittleren Abschnitt, mit einer axialen Erstreckungskomponente verläuft.

11. Vorrichtung nach einem der Ansprüche 1 bis 10, **dadurch gekennzeichnet, dass** ein jeweiliger Einleger (40) der ringsegmentförmigen Elastomerpakete (11, 12, 13; 11', 12', 13') im Querschnitt eine stufenartige Gestalt aufweist.

12. Vorrichtung nach einem der Ansprüche 1 bis 11, **dadurch gekennzeichnet, dass** an einem ringsegmentförmigen Elastomerpaket (11, 12, 13; 11', 12', 13') das luftfederseitige Beschlagelement (20) sowie ein axial benachbarter Einleger (40) sich parallel erstrecken.

13. Vorrichtung nach einem der Ansprüche 1 bis 12, **dadurch gekennzeichnet, dass** sich das luftfederseitige Beschlagelement (20) sowie ein axial benachbarter Einleger (40) eines ringsegmentförmigen Elastomerpakets (11, 12, 13; 11', 12', 13') axial überlappen.

14. Vorrichtung nach einem der Ansprüche 1 bis 13, **dadurch gekennzeichnet, dass** das karosserieseitige Beschlagelement (50, 50') an seiner zu einer Elastomerlage weisenden Innenfläche im Querschnitt stufenartig ausgebildet ist.

15. Luftfederanordnung (1), zumindest umfassend eine Luftfeder sowie eine Vorrichtung (10) nach einem der Ansprüche 1 bis 14.
